# EUROPÄISCHE PATENTSCHRIFT

(11) **EP 2 984 430 B1**
(45) Veröffentlichungstag und Bekanntmachung des Hinweises auf die Patenterteilung: **06.09.2017**
(21) Anmeldenummer: 14716275.4
(22) Anmeldetag: 04.04.2014
(51) Int. Cl.: F26B 21/02, F26B 21/08, F26B 23/00

(54) **BANDTROCKNER MIT EINEM TROCKNUNGSRAUM**
BELT DRYER WITH A DRYING AREA
SÉCHOIR À BANDE TRANSPORTEUSE COMPORTANT UNE CHAMBRE DE SÉCHAGE

(30) Priorität: 10.04.2013 DE 102013206268
(43) Veröffentlichungstag der Anmeldung: 17.02.2016
(73) Patentinhaber: KBA-MetalPrint GmbH, 70435 Stuttgart (DE)
(72) Erfinder: KURZ, Peter, 73663 Berglen (DE)
(74) Vertreter: Koenig & Bauer AG
(86) Internationale Anmeldenummer: PCT/EP2014/056794
(87) Internationale Veröffentlichungsnummer: WO 2014/166830

(56) Entgegenhaltungen:
- EP-A1- 0 502 602
- EP-A1- 1 375 638
- EP-A1- 2 404 758

## Beschreibung

Die Erfindung betrifft einen Bandtrockner mit einem Trocknungsraum gemäß dem Oberbegriff des Anspruches 1.

EP 2 404 758 A1 offenbart einen derartigen Bandtrockner.

Ein Bandtrockner ist ein Apparat der thermischen Verfahrenstechnik zum kontinuierlichen Trocknen und gegebenenfalls auch Kühlen von Nassgut mit Hilfe von Luft, Inertgas oder Rauchgas. Ein Bandtrockner weist einen Einlaufkopf, einen Trocknungsraum mit mindestens einer Trocknungskammer bzw. mit mindestens einer Trocknungszelle und einen Auslaufkopf auf. Das Nassgut wird im oder am Einlaufkopf auf mindestens einem insbesondere horizontal angeordneten, z. B. perforierten Trocknungsband aufgegeben und durchläuft i. d. R. kontinuierlich und gleichmäßig den zumeist mehrere Trocknungskammern aufweisenden Trocknungsraum. Dabei wird das Nassgut von Heizgasen durchströmt bzw. überströmt und dadurch getrocknet. Am Auslaufkopf wird das getrocknete Nassgut vom Trocknungsband wieder abgenommen. Die mindestens eine Trocknungskammer ist mit einem Ventilator zur Erzeugung von Umluft und mit mindestens einem Heizelement bzw. Heizregister ausgerüstet. Im Falle mehrerer Trocknungskammern ist vorzugsweise jede dieser Kammern jeweils mit einem Ventilator zur Erzeugung von Umluft in der betreffenden Trocknungskammer und mit mindestens einem Heizelement bzw. Heizregister ausgerüstet. Dadurch kann jede Trocknungskammer bezüglich der in ihr vorhandenen Temperatur und/oder Strömung, insbesondere Luftströmung, individuell gesteuert werden. Somit kann die jeweilige Strömungsgeschwindigkeit der das betreffende Nassgut anströmenden Trocknungs- und/oder Kühlungsluft z. B. in der betreffenden oder in jeder Trocknungskammer variiert werden. Darüber hinaus kann auch z. B. die Transportgeschwindigkeit des durch den Trocknungsraum transportierten Nassguts variiert werden, womit ein zusätzlicher Parameter für eine Einstellung der Trocknungszeit des Nassguts gegeben ist. Die Beheizung oder Kühlung der Trocknungskammern kann entweder direkt oder indirekt erfolgen. Als Heizmedium ist z. B. Öl, Dampf, Warmwasser oder insbesondere ein Heizgas einsetzbar. Für die Ausführung des Trocknungsprozesses ist es notwendig sicher zu stellen, dass eine bestimmte Menge an Abluft aus dem Trocknungsraum abgeführt wird. Um im Trocknungsraum trotz abzuführender Abluft einen bestimmten Wert für den vorgesehenen Luftdruck zumindest annähernd konstant zu halten, wird die abgeführte Luft durch andere Luft z. B. aus der Umgebung des Bandtrockners ersetzt. Eine Mindestmenge an Abluft ergibt sich somit aus im Trocknungsraum des Bandtrockners aufrecht zu erhaltenen Luftdrücken sowie Luftströmungen.

Ein Bandtrockner wird z. B. verwendet, um Dosen zu trocknen, insbesondere aus einem metallischem Werkstoff, z. B. aus Aluminium oder Stahl gefertigte Dosen. Derartige Dosen werden als Behältnisse z. B. für Getränke oder Nahrungsmittel verwendet. Insbesondere bei einer Verwendung der Dosen in der Getränke abfüllenden oder Nahrungsmittel verpackenden Industrie ist ein Trocknungsprozess z. B. dann erforderlich, wenn die Getränkedosen nach einem Umformen ihres metallischen Ausgangsmaterials durch eine Waschanlage gefahren werden, um von ihrem jeweiligen Dosenkörper ein beim Umformen verwendetes Ziehmittel zu entfernen. In der Waschanlage werden die Dosen z. B. mit Wasser benetzt, wobei das Wasser im Bandtrockner beim Durchgang der Dosen durch denselben verdampft wird. Des Weiteren ergibt sich die Notwendigkeit für einen Trocknungsprozess beispielsweise auch dann, wenn die Dosen z. B. innenseitig mit einem Lack beschichtet werden, um ihre chemische Resistenz zu verbessern, so dass sie insbesondere korrosionsfest und/oder säurebeständig ausgebildet sind und schadlos z. B. mit diversen Flüssigkeiten und/oder Kohlensäure in Kontakt gebracht werden können. Im Unterschied zu einer Trocknung nur mit Wasser benetzter Dosen ist beim Trocknen lackierter Dosen und/oder beim Aushärten ihres Lackes eine Freisetzung von Lösemitteln aus dem betreffenden Lack und damit ein Explosionsschutz für den Bandtrockner zu berücksichtigen.

Ein Bandtrockner, der beim Trocknen lackierter Dosen und/oder beim Aushärten ihres Lackes verwendet wird, weist z. B. einen Trocknungsraum mit mehreren, insbesondere drei Trocknungskammern auf und ist explosionssicher ausgebildet. Die jeweiligen Trocknungskammern sind dabei hinsichtlich der Temperatur der in ihnen jeweils für den Trocknungsprozess verwendeten Luft vorzugsweise einzeln und unabhängig voneinander einstellbar. Beispielsweise ist der Bandtrockner derart ausgebildet, dass in die erste Trocknungskammer eingebrachte Dosen durch ein in dieser Trocknungskammer wirkendes direkt beheiztes Umluftsystem auf eine Temperatur von z. B. 120°C bis 140°C aufgeheizt werden, um ihnen anhaftendes Wasser und z. B. auch niedrig siedende Lösemittel zu verdampfen. In der zweiten Trocknungskammer werden die Dosen weiter aufgeheizt, z. B. auf eine Temperatur von ca. 200°C, um je nach Zusammensetzung der verwendeten Lacke und/oder einer Transportgeschwindigkeit dieser Dosen durch diese zweite Trocknungskammer auch höher siedende Lösemittel zu verdampfen. In der dritten Trocknungskammer wird der an den Dosen aufgetragene Lack ausgehärtet, indem die Dosen auf einer Temperatur von ca. 200°C gehalten werden. Das verdampfte Wasser und/oder die freigesetzten Lösemittel werden durch die Abluft aus der jeweiligen Trocknungskammer abgeführt, wobei das Volumen der Abluft durch frische Luft z. B. aus der Umgebung des Bandtrockners ersetzt wird, wodurch auch verhindert wird, dass sich im Innern des Trocknungsraums ein Unterdruck ausbildet. Ferner kann vorgesehen sein, dass die Dosen im Anschluss an die dritte Trocknungskammer noch einer Kühlkammer zugeführt werden und dort eine Kühlzone durchlaufen, um ihre Temperatur auf einen deutlich niedrigeren Wert abzusenken, damit die Dosen für ihren weiteren Transport und/oder ihre weitere Verwendung geeignet sind.

Durch die EP 2 404 758 A1 ist eine bogenverarbeitende Maschine, insbesondere eine Bogendruckmaschine bekannt, mit einem oder mehreren Trocknern, Luftzuführungseinrichtungen für die Trockner, mindestens einer Luftabführungseinrichtung für die erwärmte Abluft sowie einer Mischeinrichtung für das Zumischen von warmer Trocknerabluft zur Trocknerzuluft, wobei eine Steuer- oder Regeleinrichtung vorgesehen ist, die das Ausmaß der Zumischung der Trocknerabluft zur Trocknerzuluft anhand von Messgrößen oder Einstellwerten steuert oder regelt, die mit dem Feuchtegehalt der Abluft korreliert wird. Vorzugsweise enthält die Mischeinrichtung eine oder mehrere motorisch angetriebene und von der Steuer- oder Regeleinrichtung betätigbare Mischklappe(n), wobei die Mischklappe(n) in diskreten Stufen verstellbar ist / sind. In einem Ausführungsbeispiel wird einer der Trockner über ein Gebläse und ein Heizregister mit Heißluft versorgt, wobei das Gebläse von einer Steuerung bezüglich seiner Drehzahl entsprechend dem Druck im Trockner regelbar ist. Im Zuluftkanal vor dem Gebläse ist eine erste Drosselklappe angeordnet, und zwar strömungstechnisch vor einem Punkt, an dem über eine zweite Drosselklappe ein Teil der erwärmten Abluft des Trockners in die Zuluft eingespeist wird. Im Abluftkanal ist ein Gebläse angeordnet, dessen Antrieb ebenfalls von der Steuerung bezüglich seiner Drehzahl entsprechend dem Druck geregelt ist.

Durch die EP 1 375 638 A1 ist bekannt, die in einen Trocknungsraum geblasene Luftmenge in Abhängigkeit von der Luftfeuchte zu steuern und eine in der Zuluft gemessene absolute Feuchte auf einen vorgegebenen Wert zu halten.

Durch die DE 25 34 479 A1 ist eine Temperatursteuereinrichtung bei einer Trockenmaschine für laufende Garnbannen bekannt, wobei eine in Laufrichtung der Garnbahn langgestreckte Trockenkammer, die von einem kastenförmigen Rahmen umgrenzt wird, vorgesehen ist. Ein in Strömungsrichtung oberhalb liegender Anschluss einer Luftsaugleitung ist an einem Ende mit der Trockenkammer verbunden. Ein in Strömungsrichtung oberhalb liegender Anschluss einer Absaugeinrichtung, um Luft aus dem System abzusaugen, ist mit der Luftsaugleitung verbunden. Ein in Strömungsrichtung oberhalb liegender Anschluss einer Umlaufleitung ist mit der Saugleitung und deren unterhalb liegender Anschluss ist mit dem gegenüberliegenden Ende der Trockenkammer verbunden. Es sind ein der Umlaufleitung zugeordneter Heizer und ein der Umlaufleitung zugeordnetes Umlaufgebläse vorgesehen sowie eine Einrichtung, um die Saugleitung wahlweise mit der Umlaufleitung und der Absaugeinrichtung zu verbinden, ferner eine Einrichtung, um abhängig vom Laufzustand der Trockenmaschine die Zufuhr an thermischer Energie in die Trockenkammer zu steuern. Schließlich ist auch eine Einrichtung zum Steuern der genannten Elemente in einem vorgegebenen zeitlichen Ablauf vorgesehen.

Durch die DE 32 05 962 C2 ist eine Anordnung von Heizelementen in einem Trocknungsraum bekannt.

Durch die DE 857 925 B ist ein Verfahren zum Trocknen von vorwiegend lackierten Blechdosenrümpfen mittels heißer, die Gutstransportfläche durchströmender Trockengase in Bandtrocknern bekannt.

Durch die DE 1 114 148 A ist ein Flachbahn-Durchlüftungstrockner mit einem in einem geschlossenen Kreislauf umgewälztem Trocknungsmittel bekannt.

Der Erfindung liegt die Aufgabe zugrunde, einen Bandtrockner mit einem Trocknungsraum zu schaffen, bei dem das Abluftsystem für eine optimale Spülung des Trocknungsraums des Bandtrockners sorgt.

Die Aufgabe wird erfindungsgemäß durch die Merkmale des Anspruches 1 gelöst.

Die mit der Erfindung erzielbaren Vorteile bestehen insbesondere darin, dass ein Bandtrockner mit einem Abluftsystem bereitgestellt wird, welches bei der Bereitstellung von Trocknungswärme, d. h. von Energie zum Betreiben eines Heizelementes, in erheblichem Umfang Einsparungen am Heizmedium ermöglicht und dadurch die Energieeffizienz des Bandtrockners verbessert. Das vorgeschlagene Abluftsystem sorgt für eine optimale Spülung des Trocknungsraums des Bandtrockners und hält ihn sauber, während nur die zur Ausführung des Trocknungsprozesses wirklich notwendige Menge an Abluft aus dem Trocknungsraum abgeführt wird. Ein Spülzyklus wird dabei von einer Steuereinheit derart eingestellt und bei Bedarf nachgeregelt werden, dass die aus dem Trocknungsraum abzuführende Luft hinsichtlich ihrer relativen Feuchtigkeit innerhalb eines vorgegebenen oder zumindest vorgebbaren Sollwertbereiches liegt. Es ist von Vorteil, dass das gefundene Abluftsystem auch an bestehenden Trocknungsanlagen nachrüstbar ist.

Ein Ausführungsbeispiel der Erfindung ist in den Zeichnungen dargestellt und wird im Folgenden näher beschrieben.

Es zeigen:
- Fig. 1: einen ersten Betriebszustand eines Abluftsystems eines Bandtrockners;
- Fig. 2: einen zweiten Betriebszustand des Abluftsystems des Bandtrockners;
- Fig. 3: einen Bandtrockner mit drei Trocknungskammern und einer Kühlzone.

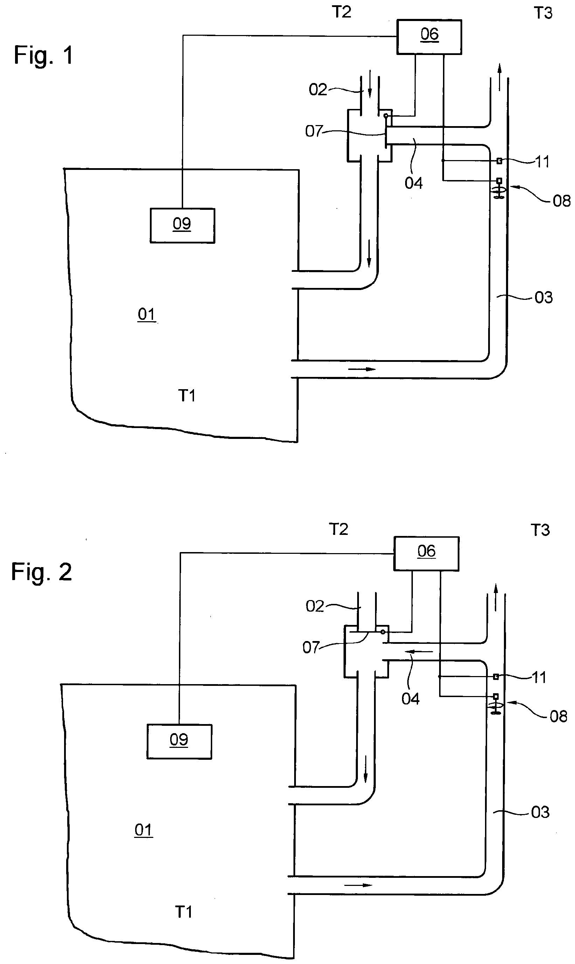

Die Fig. 1 und 2 zeigen stark vereinfacht jeweils in einem Teilschnitt einer Seitenansicht einen Trocknungsraum 01 eines Bandtrockners, wobei an den Trocknungsraum 01 mindestens ein Zuluftkanal 02 zum Zuführen von Luft in den Trocknungsraum 01 und mindestens ein Abluftkanal 03 zum Abführen von Luft aus dem Trocknungsraum 01 angeschlossen sind. Der in der bevorzugten Anwendung zur Trocknung von gewaschenen oder lackierten Dosen, vorzugsweise Getränkedosen, insbesondere Blechdosen verwendete Bandtrockner ist z. B. in einer Halle eines Gebäudes aufgestellt, so dass der mindestens eine Zuluftkanal 02 Luft aus der Halle dem Trocknungsraum 01 zuführt und der mindestens eine Abluftkanal 03 aus dem Trocknungsraum 01 abzuführende Luft z. B. über ein Dach der Halle abführt. Im Trocknungsraum 01 ist z. B. ein von mindestens einem Heizelement direkt beheiztes Umluftsystem ausgebildet, wobei ein im Trocknungsraum 01 angeordneter, nicht dargestellter Umluftventilator dort befindliche Luft umwälzt. Im Trocknungsraum 01 ist eine zur Ausführung eines Trocknungsprozesses erforderliche Prozesstemperatur T1 von im Bereich z. B. von 180°C bis 200°C eingestellt. Die den Bandtrockner umgebende Luft, z. B. die Luft in der Halle, hat eine Temperatur T2 im Bereich von z. B. 20°C bis 25°C. Zwischen dem mindestens einen Abluftkanal 03 und dem mindestens einen Zuluftkanal 02 ist mindestens ein die vorgenannten Kanäle 02; 03 miteinander verbindender Rückführungskanal 04 vorgesehen, wobei dieser Rückführungskanal 04 vorzugsweise außerhalb des Trocknungsraüms 01 angeordnet ist. Die über den mindestens einen Abluftkanal 03 aus dem Trocknungsraum 01 abgeführte Luft hat eine Temperatur T3 von z. B. 160°C. Die entweder über den Zuluftkanal 02 und/oder den Rückführungskanal 04 jeweils in den Trocknungsraum 01 geführte Luft weist somit stets eine geringere Temperatur T2; T3 auf als die im Trocknungsraum 01 vorgesehene Prozesstemperatur T1.

Um die Energieeffizienz des Bandtrockners zu verbessern, ist z. B. im Zuluftkanal 02 oder im Rückführungskanal 04 ein z. B. von einer Steuereinheit 06 gesteuertes Stellelement 07 angeordnet, wobei mit dem Stellelement 07 eine Menge der über den Rückführungskanal 04 vom Abluftkanal 03 in den Zuluftkanal 02 zurückgeführten oder zumindest zurückführbaren Luft und/oder eine Dauer für die Rückführung der über den Rückführungskanal 04 vom Abluftkanal 03 in den Zuluftkanal 02 zurückgeführten oder zumindest zurückführbaren Luft eingestellt oder zumindest einstellbar sind. Das Stellelement 07 ist z. B. als eine pneumatisch oder elektrisch verstellbare Klappe ausgebildet. Das z. B. als Klappe ausgebildete Stellelement 07 nimmt abwechselnd mindestens zwei stabile Betriebsstellungen ein, wobei dieses Stellelement 07 in seiner einen Betriebsstellung, wie in der Fig. 1 dargestellt, den Rückführungskanal 04 verschließt und den Zuluftkanal 02 öffnet, und in seiner anderen Betriebsstellung, wie in der Fig. 2 dargestellt, den Rückführungskanal 04 öffnet und den Zuluftkanal 02 verschließt. Im Abluftkanal 03 ist vorzugsweise ein von der Steuereinheit 06 gesteuerter oder zumindest steuerbarer Ventilator 08 zum Fördern der Abluft angeordnet, wobei die Rotation dieses Ventilators 08 durch einen Ringpfeil angedeutet ist. In den Fig. 1 und 2 sind die jeweiligen Luftströmungen jeweils durch Richtungspfeile angedeutet. Die Menge der über den Rückführungskanal 04 vom Abluftkanal 03 in den Zuluftkanal 02 zurückgeführten oder zumindest zurückführbaren Luft beträgt z. B. 1.000 bis 1.500 m³/h je Trocknungskammer des Trocknungsraums 01.

Im Fall der Steuerung des Stellelementes 07 durch die Steuereinheit 06 steuert die Steuereinheit 06 das Stellelement 07 in einem z. B. in einem Programm voreingestellten oder zumindest voreinstellbaren Zyklus, wobei dieser Zyklus auch als Spülzyklus bezeichnet wird. Dieser Zyklus ist bzw. wird vorzugsweise derart eingestellt, dass das Stellelement 07 für eine erste Dauer Δt1 in seiner ersten Betriebsstellung eingestellt ist, so dass während dieser ersten Dauer Δt1 der Rückführungskanal 04 verschlossen und der Zuluftkanal 02 geöffnet ist, und das Stellelement 07 für eine zweite Dauer Δt2 in seiner zweiten Betriebsstellung eingestellt ist, so dass während dieser zweiten Dauer Δt2 der Rückführungskanal 04 geöffnet und der Zuluftkanal 02 verschlossen ist. Die erste Dauer Δt1 für die erste Betriebsstellung des Stellelementes 07 und die zweite Dauer Δt2 für die zweite Betriebsstellung des Stellelementes 07 werden von der Steuereinheit 06 abwechselnd aufeinander eingestellt. Die erste Dauer Δt1 für die erste Betriebsstellung des Stellelementes 07 beträgt z. B. 5 bis 10 Minuten und wird als Spülzeit bezeichnet, wohingegen die zweite Dauer Δt2 für die zweite Betriebsstellung des Stellelementes 07 z. B. 1 bis 3 Stunden betragen kann und als Rückführzeit bezeichnet wird. In einer vorteilhaften Ausbildung des zum Trocknen gewaschener Dosen 17 verwendeten Bandtrockners ist die erste Dauer Δt1 für die erste Betriebsstellung des Stellelementes 07 und/oder die zweite Dauer Δt2 für die zweite Betriebsstellung des Stellelementes 07 z. B. von der Steuereinheit 06 jeweils z. B. in Abhängigkeit von der relativen Feuchtigkeit der Abluft eingestellt, wobei im Fall der automatischen Einstellung ein z. B. im Abluftkanal 03 angeordneter, die relative Feuchtigkeit der Abluft erfassender Messfühler 11 mit der Steuereinheit 06 verbunden ist. Die Abluft soll eine relative Feuchtigkeit vorzugsweise im Bereich von 3% bis 5% aufweisen. Die erste Dauer Δt1 für die erste Betriebsstellung des Stellelementes 07 und/oder die zweite Dauer Δt2 für die zweite Betriebsstellung des Stellelementes 07 ist von Steuereinheit 06 jeweils in Abhängigkeit von einem z. B. vom Messfühler 11 bereitgestellten Messwert vorzugsweise derart eingestellt, dass die über den mindestens einen Abluftkanal 03 aus dem Trocknungsraum 01 abzuführende Luft hinsichtlich ihrer relativen Feuchtigkeit innerhalb dieses zuvor festgelegten Sollwertbereiches liegt. Bei Bedarf verändert die Steuereinheit 06 in Form einer Nachregelung die erste Dauer Δt1 für die erste Betriebsstellung des Stellelementes 07 und/oder die zweite Dauer Δt2 für die zweite Betriebsstellung des Stellelementes 07, so dass für die aus dem Trocknungsraum 01 abzuführende Luft hinsichtlich ihrer relativen Feuchtigkeit der angestrebte Sollwertbereich eingehalten wird.

Durch die Steuerung des Stellelementes 07 in der zuvor beschriebenen Weise lässt sich Heizmedium im bedeutsamen Maße einsparen, was folgende Beispielrechnung verdeutlicht:

Um für eine Trocknungskammer des Trocknungsraums 01 1000 m³ Luft pro Stunde in der Spülzeit von T2 = 25°C auf die Prozesstemperatur T1 = 180°C zu erwärmen, werden 44 kWh Energie benötigt.

Um für eine Trocknungskammer des Trocknungsraums 01 1000 m³ Luft pro Stunde in der Rückführzeit von T3 = 160°C auf die Prozesstemperatur T1 = 180°C zu erwärmen, werden 6 kWh Energie benötigt.

Stellt man nun an der Steuereinheit 06 einen Zyklus von sich abwechselnder Spülzeit und Rückführzeit ein, bei dem die Spülzeit z. B. 5 Minuten und die Rückführzeit z. B. 55 Minuten betragen, werden in der Spülzeit ca. 3,6 kWh Energie und in der Rückführzeit ca. 5 kWh Energie benötigt, in Summe also ca. 8,6 kWh Energie. Gegenüber einem Prozess ohne Rückführung, bei welchem die dem Trocknungsraum 01 zuzuführende Luft permanent von der Umgebungstemperatur T2 = 25°C auf die Prozesstemperatur T1 = 180°C erwärmt wird und welcher Prozess z. B. 44 kWh Energie benötigt, ergibt sich eine Energieersparnis von 35,4 kWh oder ca. 80% je Trocknungskammer des Trocknungsraums 01. Wenn als Heizmedium z. B. ein Heizgas, z. B. Erdgas verwendet wird, lassen sich somit für eine oder jede Trocknungskammer des Trocknungsraums 01 rund 3,5 m³/h Erdgas einsparen.

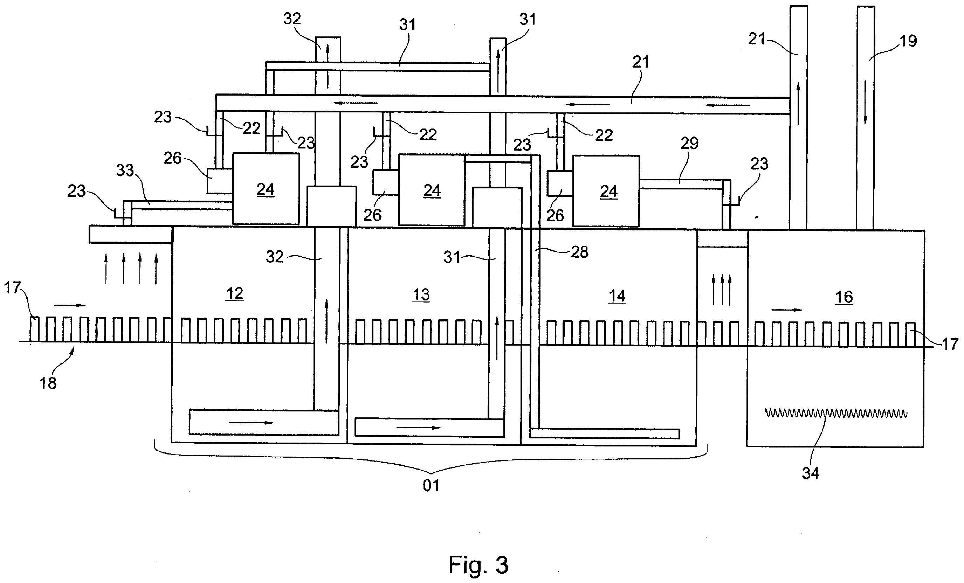

Fig. 3 zeigt schematisch einen z. B. in einer Halle eines Gebäudes angeordneten Bandtrockner mit einem Trocknungsraum 01, wobei dieser Trocknungsraum 01 mehrere, z. B. drei nacheinander angeordnete Trocknungskammern 12; 13; 14 aufweist, und mit einer der letzten, hier dritten Trocknungskammer 14 nachgeordneten Kühlkammer 16. Mehrere Dosen 17, vorzugsweise Blechdosen, z. B. Getränkedosen, insbesondere lackierte Dosen 17, werden auf einem horizontal angeordneten, z. B. perforierten Trocknungsband 18 aneinander gereiht vorzugsweise kontinuierlich durch den Trocknungsraum 01 und die Kühlkammer 16 hindurchgeführt. In der Fig. 3 ist die Transportrichtung der Dosen 17 durch den Trocknungsraum 01 und die Kühlkammer 16 durch einen Pfeil angedeutet. Jede der z. B. drei Trocknungskammern 12; 13; 14 weist jeweils ein z. B. direkt beheiztes Umluftsystem auf, wobei in jeder Trocknungskammer 12; 13; 14 das jeweilige Heizelement 09 von der Steuereinheit 06 unabhängig von dem Heizelement 09 in einer anderen Trocknungskammer 12; 13; 14 auf eine bestimmte Temperatur eingestellt oder zumindest einstellbar ist. In der in Transportrichtung der Dosen 17 ersten Trocknungskammer 12 ist eine Prozesstemperatur von z. B. 140°C eingestellt. In der zweiten Trocknungskammer 13 und in der dritten Trocknungskammer 14 sind jeweils eine Prozesstemperatur von z. B. 200°C eingestellt. Die jeweilige in verschiedenen Trocknungskammern 12; 13; 14 vorhandene Luft kann somit auf eine gleiche Temperatur oder auf unterschiedliche Temperaturen erwärmt sein. Es wird angenommen, dass die Luft in der Halle eine Temperatur im Bereich von z. B. 20°C bis 25°C aufweist. Die Kühlkammer 16 weist einen Zuluftkanal 19 auf, mittels welchem Luft aus der Halle, also den Bandtrockner umgebende Luft, in die Kühlkammer 16 geleitet wird. Die der Kühlkammer 16 von außen zugeführte Luft wird aus mindestens einem vorzugsweise unterhalb der Dosen 17 angeordneten Auslass 34 gegen die zuvor in den Trocknungskammern 12; 13; 14 aufgeheizten Dosen 17 geführt, so dass diese Luftströmung einen großen Teil der thermischen Energie dieser Dosen 17 aufnimmt und dabei die durch die Kühlkammer 16 geführten Dosen 17 abkühlt. Die die Dosen 17 umströmende Luft erwärmt sich durch den Wärmetausch ausgehend von der in der Halle herrschenden Temperatur im Bereich von z. B. 20°C bis 25°C auf eine Temperatur im Bereich von z. B. 60°C bis 80°C. Es ist vorteilhaft, diese in der Kühlkammer 16 durch die zuvor aufgeheizten Dosen 17 erwärmte Luft mittels eines Abluftkanals 21 zumindest teilweise mindestens einer der vorgeordneten Trocknungskammern 12; 13; 14 zuzuführen. In der bevorzugten Ausführung ist bzw. wird mehreren, vorzugsweise jeder der der Kühlkammer 16 vorgeordneten Trocknungskammern 12; 13; 14 jeweils mittels einer vom Abluftkanal 21 abzweigenden Zuleitung 22 ein jeweils im Volumen einstellbarer Teil der in der Kühlkammer 16 durch die zuvor aufgeheizten Dosen 17 erwärmten Luft zugeführt. Die von der Kühlkammer 16 in die jeweilige Trocknungskammer 12; 13; 14 geleitete Luft wird z. B. über das jeweilige in der betreffenden Trocknungskammer 12; 13; 14 angeordnete Heizelement 09 geführt, wobei dieses Heizelement 09 insbesondere bei der Verwendung von Heizgas als Heizmedium z. B. als ein Brennerflammrohr ausgebildet ist. Zur Einstellung des jeweiligen Volumens der der jeweiligen Trocknungskammer 12; 13; 14 aus der Kühlkammer 16 zuzuführenden Luft ist in der jeweiligen Zuleitung 22 zu der betreffenden Trocknungskammer 12; 13; 14 jeweils ein manuell oder fernbetätigbar z. B. von der Steuereinheit 06 eingestelltes oder zumindest einstellbares Stellelement 23 angeordnet. Jede Trocknungskammer 12; 13; 14 oder zumindest mehrere Trocknungskammern 12; 13; 14 weisen jeweils einen Lufteinlass 24 mit einem Anschlussstutzen 26 auf, an welchen Anschlussstutzen 26 die jeweilige vom Abluftkanal 21 abzweigende Zuleitung 22 jeweils angeschlossen ist, wobei z. B. in dem betreffenden Anschlussstutzen 26 oder in dem betreffenden Lufteinlass 24 jeweils ein Ventilator 27 angeordnet ist, mit welchem Ventilator 27 die durch die jeweilige vom Abluftkanal 21 abzweigende Zuleitung 22 geführte Luft aus der Kühlkammer 16 angesaugt wird oder zumindest ansaugbar ist. Die jeweilige Luftströmung durch den Abluftkanal 21 und die jeweiligen Zuleitungen 22 ist jeweils durch einen Pfeil angedeutet.

Die Trocknung der lackierten Dosen 17 ist zumeist abgeschlossen, nachdem die auf dem den Trocknungsraum 01 durchlaufenden Trocknungsband 18 aufgestellten Dosen 17 die in ihrer Transportrichtung erste Trocknungskammer 12 durchlaufen haben. Spätestens beim Durchlauf der Dosen 17 durch die zweite Trocknungskammer 13 ist deren Trocknungsprozess endgültig abgeschlossen. In der zweiten Trocknungskammer 13, deren Umluft, d. h. deren Prozesstemperatur z. B. auf 200°C eingestellt ist, verdampfen auch die im Lack enthaltenen höher siedenden Lösemittel. Die in der dritten Trocknungskammer 14 vorhandene Luft wird daher kaum bis gar nicht mit Wasserdampf und/oder Lösemitteldämpfen belastet. Die in der dritten Trocknungskammer 14 vorhandene Luft gilt daher im Vergleich zu den vorangegangenen beiden Trocknungskammern 12; 13 als "sauber". Dennoch ist auch aus der dritten Trocknungskammer 14 die durch die am Heizelement 09 ausgeführte Verbrennung verbrauchte Luft abzuführen und durch insbesondere sauerstoffreiche Luft zu ersetzen, um insbesondere bei der Verwendung von Heizgas als Heizmedium am z. B. als ein Brennerflammrohr ausgebildeten Heizelement 09 die Verbrennung in Gang zu halten und Luftdruckunterschiede im Trocknungsraum 01 und in seinem Luftführungssystem auszugleichen. Es trägt zur Energieeinsparung bei, wenn die in der dritten Trocknungskammer 14 immerhin noch ca. 180°C heiße Abluft über einen separaten Verbindungskanal 28 in die zweite Trocknungskammer 13 geleitet wird, wobei der separate Verbindungskanal 28 als ein Rückführungskanal ausgebildet ist, der nur, d. h. ohne Abzweig mit der unmittelbar vor der Kühlkammer 16 angeordneten Trocknungskammer 14 und mit der vor dieser Trocknungskammer 14 angeordneten Trocknungskammer 13 verbunden ist. Der separate Verbindungskanal 28 weist demnach keine direkte Verbindung ins Freie auf, d. h. er weist insbesondere keinen Abzweig zur Umgebung des Bandtrockners oder aus dem Gebäude, z. B. aus der Halle heraus auf, in welchem bzw. in welcher der Bandtrockner aufgestellt ist. Für das Absaugen der Abluft aus der dritten Trocknungskammer 14, d. h. der unmittelbar vor der Kühlkammer 16 angeordneten Trocknungskammer 14, ist i. d. R. ein Ventilator nicht erforderlich, weil ein im Bereich des in der zweiten Trocknungskammer 13 angeordneten Heizelementes 09 herrschender Unterdruck zur Erzeugung einer Luftströmung in Richtung dieser zweiten Trocknungskammer 13 zumeist ausreicht. Es kann vorgesehen sein, dass der dritten Trocknungskammer 14 über einen z. B. mit ihrem Lufteinlass 24 verbundenen weiteren Zuluftkanal 29 auch solche Luft zugeführt wird, die aus einem Bereich zwischen der dritten Trocknungskammer 14 und der ihr nachgeordneten Kühlkammer 16 abgesaugt wird, wobei ein Volumen dieser Zuluft mittels eines z. B. in diesem Zuluftkanal 29 angeordneten vorzugsweise fernsteuerbaren Stellelementes 23 eingestellt oder zumindest einstellbar ist.

Wenn der zweiten Trocknungskammer 13 Abluft aus der ihr in Transportrichtung des Trocknungsbandes 18 nachgeordneten dritten Trocknungskammer 14 zugeführt wird, ist aus dieser zweiten Trocknungskammer 13 über einen weiteren Abluftkanal 31 ein erhöhtes Volumen an Abluft abzuführen, wobei die aus der zweiten Trocknungskammer 13 abzuführende Abluft immerhin auch noch eine Temperatur von z. B. 180°C aufweist. In einer vorteilhaften Weiterbildung ist vorgesehen, zumindest einen Teil der über den weiteren Abluftkanal 31 aus der zweiten Trocknungskammer 13 abzuführenden Abluft der ersten Trocknungskammer 12 zuzuführen, wobei in einer vorteilhaften Ausbildung des Bandtrockners das der ersten Trocknungskammer 12 aus der zweiten Trocknungskammer 13 zuzuführende Volumen an Abluft von einem z. B. im weiteren Abluftkanal 31 angeordneten vorzugsweise fernsteuerbaren Stellelement 23 eingestellt oder zumindest einstellbar ist. Da zwischen der Temperatur der aus der zweiten Trocknungskammer 13 abzuführenden Abluft von z. B. 180°C und der Temperatur der in der ersten Trocknungskammer 12 vorhandenen Umluft von z. B. 140°C eine Temperaturdifferenz von z. B. 40°C besteht, ist hier ein weiteres Potenzial zur Energieeinsparung gegeben.

Die aus der ersten Trocknungskammer 12 abzuführende Abluft hat eine Temperatur von z. B. 120°C. Diese Abluft wird mittels eines separaten Abluftkanals 32 aus der ersten Trocknungskammer 12 abgeführt. Durch die Rückführung von Luft aus mindestens einer der der ersten Trocknungskammer 12 nachgeordneten Trocknungskammern 13; 14 vergrößert sich das Volumen der über den separaten Abluftkanal 32 aus der ersten Trocknungskammer 12 abzuführenden Abluft, was bei der Dimensionierung dieses Abluftkanals 32 zu berücksichtigen ist. Des Weiteren ist z. B. an dem Lufteinlass 24 der ersten Trocknungskammer 12 ein Zuluftkanal 33 angeschlossen, wobei mittels dieses Zuluftkanals 33 Luft aus der Umgebung des Bandtrockners angesaugt und in die erste Trocknungskammer 12 geleitet wird, wobei in einer vorteilhaften Ausbildung des Bandtrockners das Volumen der aus der Umgebung des Bandtrockners angesaugten Luft mittels eines z. B. im Zuluftkanal 33 angeordneten vorzugsweise fernsteuerbaren Stellelementes 23 eingestellt oder zumindest einstellbar ist. Dieses Stellelement 23 ist bei einem zum Trocknen lackierter Dosen 17 verwendeten Bandtrockner ebenso wie jedes andere der zuvor erwähnten Stellelemente 23 und/oder die Ventilatoren 08; 27 entweder manuell eingestellt oder zumindest einstellbar oder vorteilhafterweise jeweils von der z. B. elektrischen oder pneumatischen Steuereinheit 06 gesteuert oder zumindest steuerbar.

Insbesondere für die Verwendung zum Trocknen lackierter Dosen 17 ergibt sich demnach ein Bandtrockner mit einem Trocknungsraum 01 und mit einer Kühlkammer 16, wobei der Trocknungsraum 01 mehrere nacheinander angeordnete Trocknungskammern 12; 13; 14 aufweist und die Kühlkammer 16 der letzten Trocknungskammer 14 nachgeordnet ist, wobei die Kühlkammer 16 einen Zuluftkanal 19 aufweist, mittels welchem den Bandtrockner umgebende Luft in die Kühlkammer 16 geführt ist, wobei in der Kühlkammer 16 erwärmte Luft mittels eines Abluftkanals 21 zumindest teilweise mindestens einer der der Kühlkammer 16 vorgeordneten Trocknungskammern 12; 13; 14 zugeführt ist. Vorzugsweise ist vorgesehen, dass mehreren der Kühlkammer 16 vorgeordneten Trocknungskammern 12; 13; 14 jeweils mittels einer vom Abluftkanal 21 abzweigenden Zuleitung 22 ein jeweils im Volumen eingestellter oder zumindest einstellbarer Teil der in der Kühlkammer 16 erwärmten Luft zugeführt ist. Das Abluftsystem des Bandtrockners kann darüber hinaus derart ausgebildet sein, dass zumindest ein Teil der über einen Abluftkanal 28; 31 aus einer der Trocknungskammern 13; 14 abzuführenden Abluft der der betreffenden Trocknungskammer 13; 14 unmittelbar zuvor angeordneten Trocknungskammer 12; 13 zugeführt ist. Dabei ist üblicherweise in mindestens zwei verschiedenen Trocknungskammern 12; 13; 14 die jeweilige Prozesswärme auf unterschiedliche Temperaturen eingestellt. Ferner kann vorgesehen sein, dass an einer in Transportrichtung des den Trocknungsraum 01 durchlaufenden Trocknungsbandes 18 ersten Trocknungskammer 12 ein Zuluftkanal 33 angeschlossen ist, wobei mittels dieses Zuluftkanals 33 Luft aus der Umgebung des Bandtrockners angesaugt und in diese erste Trocknungskammer 12 geleitet ist.

### Bezugszeichenliste

- 01: Trocknungsraum
- 02: Zuluftkanal
- 03: Abluftkanal
- 04: Rückführungskanal
- 05: -
- 06: Steuereinheit
- 07: Stellelement
- 08: Ventilator
- 09: Heizelement
- 10: -
- 11: Messfühler
- 12: erste Trocknungskammer
- 13: zweite Trocknungskammer
- 14: dritte Trocknungskammer
- 15: -
- 16: Kühlkammer
- 17: Dose
- 18: Trocknungsband
- 19: Zuluftkanal
- 20: -
- 21: Abluftkanal
- 22: Zuleitung
- 23: Stellelement
- 24: Lufteinlass
- 25: -
- 26: Anschlussstutzen
- 27: Ventilator
- 28: Verbindungskanal
- 29: Zuluftkanal
- 30: -
- 31: Abluftkanal
- 32: Abluftkanal
- 33: Zuluftkanal
- 34: Auslass

- T1: Prozesstemperatur
- T2: Temperatur
- T3: Temperatur
- Δt1: Dauer
- Δt2: Dauer

## Patentansprüche

1. Bandtrockner mit einem Trocknungsraum (01), wobei an den Trocknungsraum (01) mindestens ein Zuluftkanal (02) zum Zuführen von Luft in den Trocknungsraum (01) und mindestens ein Abluftkanal (03) zum Abführen von Luft aus dem Trocknungsraum (01) angeschlossen sind, wobei mindestens ein den mindestens einen Abluftkanal (03) und den mindestens einen Zuluftkanal (02) miteinander verbindender Rückführungskanal (04) vorgesehen ist, wobei ein von einer Steuereinheit (06) gesteuertes Stellelement (07) vorhanden ist, wobei das Stellelement (07) als eine verstellbare Klappe ausgebildet ist, wobei in einer ersten Betriebsstellung des Stellelementes (07) der Rückführungskanal (04) verschlossen ist, und wobei in einer zweiten Betriebsstellung des Stellelementes (07) der Rückführungskanal (04) geöffnet ist, wobei ein eine relative Feuchtigkeit der Abluft erfassender Messfühler (11) mit der Steuereinheit (06) verbunden ist, wobei die erste Betriebsstellung des Stellelementes (07) und/oder die zweite Betriebsstellung des Stellelementes (07) von der Steuereinheit (06) jeweils in Abhängigkeit von der relativen Feuchtigkeit der Abluft eingestellt ist bzw. sind, **dadurch gekennzeichnet, dass** das als Klappe ausgebildete Stellelement (07) pneumatisch oder elektrisch verstellbar ist, wobei in der ersten Betriebsstellung des Stellelementes (07) der Zuluftkanal (02) geöffnet und in der zweiten Betriebsstellung des Stellelementes (07) der Zuluftkanal (02) verschlossen ist, wobei das Stellelement (07) von der Steuereinheit (06) in einem voreingestellten Zyklus gesteuert ist, wobei in diesem Zyklus für dieses Stellelement (07) dessen Betriebsstellungen aufeinander folgend eingestellt sind, wobei der Zyklus eine erste Dauer (Δt1) für die erste Betriebsstellung des Stellelementes (07) und eine zweite Dauer (Δt2) für die zweite Betriebsstellung des Stellelementes (07) aufweist, wobei die erste Dauer (Δt1) für die erste Betriebsstellung des Stellelementes (07) und/oder die zweite Dauer (Δt2) für die zweite Betriebsstellung des Stellelementes (07) von der Steuereinheit (06) jeweils in Abhängigkeit von der relativen Feuchtigkeit der Abluft eingestellt ist.

2. Bandtrockner nach Anspruch 1, **dadurch gekennzeichnet, dass** im Trocknungsraum (01) auf eine Prozesstemperatur (T1) erwärmte Luft vorhanden ist, wobei die in den Trocknungsraum (01) geführte Luft eine geringere Temperatur (T2; T3) aufweist als die Prozesstemperatur (T1).

3. Bandtrockner nach Anspruch 1 oder 2, **dadurch gekennzeichnet, dass** im Trocknungsraum (01) mindestens ein von der Steuereinheit (06) gesteuertes Heizelement (09) vorgesehen ist.

4. Bandtrockner nach Anspruch 1 oder 2 oder 3, **dadurch gekennzeichnet, dass** im Abluftkanal (03) ein von der Steuereinheit (06) gesteuerter oder zumindest steuerbarer Ventilator (08) zum Fördern der Abluft angeordnet ist.

5. Bandtrockner nach Anspruch 1 oder 2 oder 3 oder 4, **dadurch gekennzeichnet, dass** das von einer Steuereinheit (06) gesteuerte Stellelement (07) im Zuluftkanal (02) oder im Rückführungskanal (04) angeordnet ist.

6. Bandtrockner nach Anspruch 1 oder 2 oder 3 oder 4 oder 5, **dadurch gekennzeichnet, dass** das Stellelement (07) von der Steuereinheit (06) in einem in einem Programm voreingestellten oder zumindest voreinstellbaren Zyklus gesteuert ist.

7. Bandtrockner nach Anspruch 1 oder 2 oder 3 oder 4 oder 5 oder 6, **dadurch gekennzeichnet, dass** der Zyklus derart eingestellt ist, dass die erste Dauer (Δt1) für die erste Betriebsstellung des Stellelementes (07) 5 bis 10 Minuten beträgt und/oder dass die zweite Dauer (Δt2) für die zweite Betriebsstellung des Stellelementes (07) 1 bis 3 Stunden beträgt.

8. Bandtrockner nach Anspruch 1 oder 2 oder 3 oder 4 oder 5 oder 6 oder 7, **dadurch gekennzeichnet, dass** mit dem Stellelement (07) eine Menge der über den Rückführungskanal (04) vom Abluftkanal (03) in den Zuluftkanal (02) zurückgeführten Luft und/oder eine Dauer für die Rückführung der über den Rückführungskanal (04) vom Abluftkanal (03) in den Zuluftkanal (02) zurückgeführten Luft eingestellt oder zumindest einstellbar ist bzw. sind.

9. Bandtrockner nach Anspruch 8, **dadurch gekennzeichnet, dass** der Trocknungsraum (01) mindestens eine Trocknungskammer (12; 13; 14) aufweist, wobei die Menge der über den Rückführungskanal (04) vom Abluftkanal (03) in den Zuluftkanal (02) zurückgeführten oder zumindest zurückführbaren Luft 1.000 bis 1.500 m³/h je Trocknungskammer (12; 13; 14) des Trocknungsraums (01) beträgt.

10. Bandtrockner nach Anspruch 1 oder 2 oder 3 oder 4 oder 5 oder 6 oder 7 oder 8 oder 9, **dadurch gekennzeichnet, dass** der Rückführungskanal (04) außerhalb des Trocknungsraums (01) angeordnet ist.

11. Bandtrockner nach Anspruch 1 oder 2 oder 3 der 4 oder 5 oder 6 oder 7 oder 8 oder 9 oder 10, **dadurch gekennzeichnet, dass** der die relative Feuchtigkeit der Abluft erfassende Messfühler (11) im Abluftkanal (03) angeordnet ist.

12. Bandtrockner nach Anspruch 1 oder 2 oder 3 oder 4 oder 5 oder 6 oder 7 oder 8 oder 9 oder 1. oder 11, **dadurch gekennzeichnet, dass** die erste Betriebsstellung des Stellelementes (07) und/oder die zweite Betriebsstellung des Stellelementes (07) von der Steuereinheit (06) jeweils in Abhängigkeit von einem von dem Messfühler (11) bereitgestellten Messwert derart eingestellt ist bzw. sind, dass die über den mindestens einen Abluftkanal (03) aus dem Trocknungsraum (01) abzuführende Luft hinsichtlich ihrer relativen Feuchtigkeit innerhalb eines zuvor festgelegten Sollwertbereiches liegt.

13. Bandtrockner nach Anspruch 12, **dadurch gekennzeichnet, dass** eine von der Steuereinheit (06) ausgeführte Nachregelung vorgesehen ist, mittels welcher die erste Betriebsstellung des Stellelementes (07) und/oder die zweite Betriebsstellung des Stellelementes (07) derart eingestellt ist bzw. sind, dass für die aus dem Trocknungsraum (01) abzuführende Luft hinsichtlich ihrer relativen Feuchtigkeit der angestrebte Sollwertbereich eingehalten wird.

14. Bandtrockner nach Anspruch 1 oder 2 oder 3 oder 4 oder 5 oder 6 oder 7 oder 8 oder 9 oder 10 oder 11 oder 12 oder 13, **dadurch gekennzeichnet, dass** die erste Betriebsstellung des Stellelementes (07) und/oder die zweite Betriebsstellung des Stellelementes (07) von der Steuereinheit (06) derart eingestellt ist bzw. sind, dass die über den mindestens einen Abluftkanal (03) aus dem Trocknungsraum (01) abzuführende Luft eine relative Feuchtigkeit von 3% bis 5% aufweist.

15. Bandtrockner nach Anspruch 14, **dadurch gekennzeichnet, dass** die Steuereinheit (06) in Form der Nachregelung die erste Dauer (Δt1) für die erste Betriebsstellung des Stellelementes (07) und/oder die zweite Dauer (Δt2) für die zweite Betriebsstellung des Stellelementes (07) verändert, so dass für die aus dem Trocknungsraum (01) abzuführende Luft hinsichtlich ihrer relativen Feuchtigkeit der angestrebte Sollwertbereich eingehalten wird.

## Claims

1. A belt drier, having a drying space (01), wherein at least one supply air duct (02) for feeding air into the drying space (01) and at least one exhaust air duct (03) for discharging air from the drying space (01) are connected to the drying space (01), wherein at least one return duct (04) is provided, connecting the at least one exhaust air duct (03) and the at least one supply air duct (02), wherein an adjusting element (07), controlled by a control unit (06), is provided, wherein the adjusting element (07) is formed as an adjustable flap, wherein the return duct (04) is closed in a first operating position of the adjusting element (07), and wherein the return duct (04) is open in a second operating position of the adjusting element (07), wherein a measuring sensor (11) that detects a relative humidity of the exhaust air is connected to the control unit (06), wherein the first operating position of the adjusting element (07) and/or the second operating position of the adjusting element (07) are/is set by the control unit (06) in dependence on the relative humidity of the exhaust air, **characterized in that** the adjusting element (07), which is formed as a flap, is pneumatically or electrically adjustable, wherein the supply air duct (02) is opened in the first operating position of the adjusting element (07) and the supply air duct (02) is closed in the second operating position of the adjusting element (07), wherein the adjusting element (07) is controlled by the control unit (06) in a preset cycle, wherein, for this adjusting element (07), the operating positions thereof are successively adjusted in this cycle, wherein the cycle has a first duration (Δt1) for the first operating position of the adjusting element (07) and a second duration (Δt2) for the second operating position of the adjusting element (07), wherein the first duration (Δt1) for the first operating position of the adjusting element (07) and/or the second duration (Δt2) for the second operating position of the adjusting element (07) is adjusted by the control unit (06) as a function of the relative humidity of the exhaust air.

2. The belt drier according to claim 1, **characterized in that** air heated to a process temperature (T1) is present in the drying space (01), wherein the air guided into the drying space (01) has a lower temperature (T2; T3) than the process temperature (T1).

3. The belt drier according to claim 1 or 2, **characterized in that** at least one heating element (09) controlled by the control unit (06) is provided in the drying space (01).

4. The belt drier according to claim 1 or 2 or 3, **characterized in that** a fan (08), controlled or at least controllable by the control unit (06), is arranged in the exhaust air duct (03) for moving the exhaust air.

5. The belt drier according to claim 1 or 2 or 3 or 4, **characterized in that** the adjusting element (07), which is controlled by a control unit (06), is arranged in the supply air duct (02) or in the return duct (04).

6. The belt drier according to claim 1 or 2 or 3 or 4 or 5, **characterized in that** the adjusting element (07) is controlled by the control unit (06) in a cycle that is preset, or at least pre-settable, in a program.

7. The belt drier according to claim 1 or 2 or 3 or 4 or 5 or 6, **characterized in that** the cycle is set such that the first duration (Δt1) for the first operating position of the adjusting element (07) is 5 to 10 minutes and/or that the second duration (Δt2) for the second operating position of the adjusting element (07) is 1 to 3 hours.

8. The belt drier according to claim 1 or 2 or 3 or 4 or 5 or 6 or 7, **characterized in that** a volume of the air returned into the supply air duct (02) from the exhaust air duct (03) via the return duct (04) and/or a duration for the return of the air into the supply air duct (02) from the exhaust air duct (03) via the return duct (04) is adjusted, or at least adjustable, by the adjusting element (07).

9. The belt drier according to claim 8, **characterized in that** the drying space (01) has at least one drying chamber (12; 13; 14), wherein the volume of the air which is returned into the supply air duct (02) from the exhaust air duct (03) via the return duct (04), or at least the volume of returnable air, is 1,000 to 1,500 m3/h per drying chamber (12; 13; 14) of the drying space (01).

10. The belt drier according to claim 1 or 2 or 3 or 4 or 5 or 6 or 7 or 8 or 9, **characterized in that** the return duct (04) is arranged outside the drying space (01).

11. The belt drier according to claim 1 or 2 or 3 or 4 or 5 or 6 or 7 or 8 or 9 or 10, **characterized in that** the measuring sensor (11) detecting the relative humidity of the exhaust air is arranged in the exhaust air duct (03).

12. The belt drier according to claim 1 or 2 or 3 or 4 or 5 or 6 or 7 or 8 or 9 or 10 or 11, **characterized in that** the first operating position of the adjusting element (07) and/or the second operating position of the adjusting element (07) is or are controlled by the control unit (06) in dependence on a measured value provided by the measuring sensor (11) in such a way that the air to be discharged from the drying space (01) via the at least one exhaust air duct (03) is within a predetermined target range with respect to its relative humidity.

13. The belt drier according to claim 12, **characterized in that** a readjustment to be performed by the control unit (06) is provided, by means of which the first operating position of the adjusting element (07) and/or the second operating position of the adjusting element (07) is or are set such that the desired target range is maintained for the air to be discharged from the drying space (01) with respect to its relative humidity.

14. The belt drier according to claim 1 or 2 or 3 or 4 or 5 or 6 or 7 or 8 or 9 or 10 or 11 or 12 or 13 **characterized in that** the first operating position of the adjusting element (07) and/or the second operating position of the adjusting element 07) is or are adjusted by the control unit (06) such that the air to be discharged from the drying space (01) via the at least one exhaust air duct (03) has a relative humidity of 3% to 5%.

15. The belt drier according to claim 14, **characterized in that** the control unit (06) determines the first duration (Δt1) for the first operating position of the adjusting element (07) and/or the second duration (Δt2) for the second operating position of the adjusting element (07) in the form of the readjustment so that the desired target range is maintained for the air to be discharged from the drying space (01) with respect to its relative humidity.

## Revendications

1. Séchoir à bande transporteuse comprenant une chambre de séchage (01), au moins un canal d'air d'alimentation (02) destiné à amener de l'air dans la chambre de séchage (01) et au moins un canal d'air évacué (03) destiné à évacuer l'air de la chambre de séchage (01) étant raccordés à la chambre de séchage (01), au moins un canal de retour (04) reliant le canal ou les canaux d'air évacué (03) et le canal ou les canaux d'air d'alimentation (02) les uns aux autres étant présent, un élément de réglage (07) commandé par une unité de commande (06) étant présent, l'élément de réglage (07) étant réalisé sous la forme d'un clapet mobile, le canal de retour (04) étant fermé dans une première position de fonctionnement de l'élément de réglage (07), et, dans une deuxième position de fonctionnement de l'élément de réglage (07), le canal de retour (04) étant ouvert, un capteur de mesure (11) détectant une humidité relative de l'air évacué étant relié à l'unité de commande (06), la première position de fonctionnement de l'élément de réglage (07) et/ou la deuxième position de fonctionnement de l'élément de réglage (07) étant réglées par l'unité de commande (06) dans chaque cas en fonction de l'humidité relative de l'air évacué, **caractérisé en ce que** l'élément de réglage (07) réalisé sous la forme d'un clapet peut être déplacé de manière pneumatique ou électrique, le canal d'air d'alimentation (02) étant ouvert dans la première position de fonctionnement de l'élément de réglage (07) et, dans la deuxième position de l'élément de réglage (07), le canal d'air d'alimentation (02) étant fermé, l'élément de réglage (07) étant commandé par l'unité de commande (06) au cours d'un cycle prédéfini, les positions de fonctionnement de cet élément de réglage (07), au cours du cycle de ce dernier, étant réglées successivement, le cycle comprenant une première durée (Δt1) pour la première position de fonctionnement de l'élément de réglage (07) et une deuxième durée (Δt2) pour la deuxième position de fonctionnement de l'élément de réglage (07), la première durée (Δt1) pour la première position de fonctionnement de l'élément de réglage (07) et/ou la deuxième durée (Δt2) pour la deuxième position de fonctionnement de l'élément de réglage (07) étant réglées par l'unité de commande (06) dans chaque cas en fonction de l'humidité relative de l'air évacué.

2. Séchoir à bande transporteuse selon la revendication 1, **caractérisé en ce que** l'air chauffé à une température de traitement (T1) est présent dans la chambre de séchage (01), l'air guidé dans la chambre de séchage (01) présentant une température (T2 ; T3) inférieure à celle de la température de traitement (T1).

3. Séchoir à bande transporteuse selon la revendication 1 ou 2, **caractérisé en ce qu'**au moins un élément chauffant (09) commandé par l'unité de commande (06) est prévu dans la chambre de séchage (01).

4. Séchoir à bande transporteuse selon la revendication 1 ou 2 ou 3, **caractérisé en ce qu'**un ventilateur (08) commandé ou pouvant au moins être commandé par l'unité de commande (06) et destiné à transporter l'air évacué est agencé dans le canal d'air d'évacuation (03).

5. Séchoir à bande transporteuse selon la revendication 1 ou 2 ou 3 ou 4, **caractérisé en ce que** l'élément de réglage (07) commandé par une unité de commande (06) est agencé dans le canal d'air d'alimentation (02) ou dans le canal de retour (04).

6. Séchoir à bande transporteuse selon la revendication 1 ou 2 ou 3 ou 4 ou 5, **caractérisé en ce que** l'élément de réglage (07) est commandé par l'unité de commande (06) au cours d'un cycle prédéfini ou pouvant au moins être prédéfini dans un programme.

7. Séchoir à bande transporteuse selon la revendication 1 ou 2 ou 3 ou 4 ou 5 ou 6, **caractérisé en ce que** le cycle est réglé de telle manière que la première durée (Δt1) pour la première position de fonctionnement de l'élément de réglage (07) atteint 5 à 10 minutes et/ou **en ce que** la deuxième durée (Δt2) pour la deuxième position de fonctionnement de l'élément de réglage (07) atteint 1 à 3 secondes.

8. Séchoir à bande transporteuse selon la revendication 1 ou 2 ou 3 ou 4 ou 5 ou 6 ou 7, **caractérisé en ce qu'**une quantité d'air ramené du canal d'air évacué (03) dans le canal d'air d'alimentation (02) par le canal de retour (04) et/ou une durée pour le retour de l'air ramené du canal d'air évacué (03) dans le canal d'air d'alimentation (02) par le canal de retour (04) sont réglées ou peuvent au moins être réglées par l'élément de réglage (07).

9. Séchoir à bande transporteuse selon la revendication 8, **caractérisé en ce que** la chambre de séchage (01) comprend au moins un compartiment de séchage (12 ; 13 ; 14), la quantité d'air ramené ou pouvant au moins être ramené du canal d'air évacué (03) dans le canal d'air d'alimentation (02) par le canal de retour (04) atteignant 1 000 à 1 500 m³/h pour chaque compartiment de séchage (12 ; 13 ; 14) de la chambre de séchage (01).

10. Séchoir à bande transporteuse selon la revendication 1 ou 2 ou 3 ou 4 ou 5 ou 6 ou 7 ou 8 ou 9, **caractérisé en ce que** le canal de retour (04) est agencé à l'extérieur de la chambre de séchage (01).

11. Séchoir à bande transporteuse selon la revendication 1 ou 2 ou 3 ou 4 ou 5 ou 6 ou 7 ou 8 ou 9 ou 10, **caractérisé en ce que** le capteur de mesure (11) détectant l'humidité relative de l'air évacué est agencé dans le canal d'air évacué (03).

12. Séchoir à bande transporteuse selon la revendication 1 ou 2 ou 3 ou 4 ou 5 ou 6 ou 7 ou 8 ou 9 ou 10 ou 11, **caractérisé en ce que** la première position de fonctionnement de l'élément de réglage (07) et/ou la deuxième position de fonctionnement de l'élément de réglage (07) sont réglées par l'unité de commande (06) dans chaque cas en fonction d'une valeur de mesure fournie par le capteur de mesure (11), de telle manière que l'humidité relative de l'air à évacuer de la chambre de séchage (01) par le canal ou les canaux d'air évacué (03) se situe à l'intérieur d'une plage de valeurs théoriques à établir préalablement.

13. Séchoir à bande transporteuse selon la revendication 12, **caractérisé en ce qu'**un réajustement exécuté par l'unité de commande (06) est prévu, au moyen duquel la première position de fonctionnement de l'élément de réglage (07) et/ou la deuxième position de fonctionnement de l'élément de réglage (07) sont réglées de telle manière que, pour l'humidité relative de l'air à évacuer de la chambre de séchage (01), la plage de valeurs théoriques visée est respectée.

14. Séchoir à bande transporteuse selon la revendication 1 ou 2 ou 3 ou 4 ou 5 ou 6 ou 7 ou 8 ou 9 ou 10 ou 11 ou 12 ou 13, **caractérisé en ce que** la première position de fonctionnement de l'élément de réglage (07) et/ou la deuxième position de fonctionnement de l'élément de réglage (07) sont réglées par l'unité de commande (06) de telle manière que l'air à évacuer de la chambre de séchage (01) par le canal ou les canaux d'air évacué (03) présente une humidité relative de 3 % à 5 %.

15. Séchoir à bande transporteuse selon la revendication 14, **caractérisé en ce que** l'unité de commande (06) modifie, sous la forme du réajustement, la première durée (Δt1) pour la première position de fonctionnement de l'élément de réglage (07) et/ou la deuxième durée (Δt2) pour la deuxième position de fonctionnement de l'élément de réglage (07), de sorte que, pour l'humidité relative de l'air à évacuer de la chambre de séchage (01), la plage de valeurs théoriques visée est respectée.
